# EUROPÄISCHE PATENTSCHRIFT

(11) **EP 0 708 519 B1**
(45) Veröffentlichungstag und Bekanntmachung des Hinweises auf die Patenterteilung: **19.03.1997**
(21) Anmeldenummer: 95108188.4
(22) Anmeldetag: 29.05.1995
(51) Int. Cl.: H02K 5/22, H01R 9/16

(54) **Elektromotor, insbesondere Kommutatormotor, mit einem an einem Motorteil zugentlastet befestigbarem Zwischenklemmbrett**
Electric motor, in particular commutator motor, provided with a strain relieving intermediate terminal fixed on it
Moteur électrique, en particulier moteur à collecteur, muni de borne intermédiaire de raccordement avec décharge de traction

(30) Priorität: 19.10.1994 EP 94116481; 04.05.1995 DE 29507458 U
(43) Veröffentlichungstag der Anmeldung: 24.04.1996
(73) Patentinhaber: SIEMENS AKTIENGESELLSCHAFT, 80333 München (DE)
(72) Erfinder: Drexlmaier, Thomas, D-97450 Arnstein (DE); Rohm, Hans, Dipl.-Ing., D-97087 Würzburg (DE); Kunze, Peter, Dipl.-Ing., D-97318 Kitzingen (DE)

(56) Entgegenhaltungen:
- DE-A- 3 434 429
- US-A- 3 440 594
- US-A- 3 541 365
- US-A- 3 611 249

## Beschreibung

Die Erfindung bezieht sich auf einen Elektromotor, insbesondere Kommutatormotor, mit an einem Motorteil zugentlastet befestigbarem Zwischenklemmbrett gemäß Anspruch 1.

Durch die US-A-3 440 594 bzw. durch deren prioritätsbegründende DE-OS-16 13 222 ist die lösbare Halterung eines mit eingebetteten Motorwicklungssteckkontakten versehenen Anschlußkastens am Motorgehäuse bekannt, derart daß ein Haken an der Rückwand des Anschlußkastens an einem Ende einer vom Anschlußkasten überdeckten Motorgehäuseöffnung unter die Wandung des Motorgehäuse greift und eine Nase an einem elastisch ausgebildeten Wandteil am anderen Ende des Anschlußkastens unter bzw. gegen die Wandung des Motorgehäuses am anderen Ende der Motorgehäuseöffnung gedrückt ist.

Durch die DE-C2-34 34 429 ist ein Kommutatormotor mit einem an einem Lagerbügel befestigbarem Zwischenklemmbrett bekannt, das zur zugentlasteten Halterung und gegenseitigen Kontaktierung von Anschlußenden einer äußeren Anschlußleitung einerseits und Zwischenleitungen zu an einem motorstatorseitigen Bürstenhalter befestigten Endstördrosseln andererseits dient; in vorteilhafter Weise sind die Anschluß- bzw. Zwischenleitungen im Sinne einer vormontierten Bauteileinheit untereinander kontaktiert und an dem Zwischenklemmbrett gehalten, das dann mit zwei im wesentlichen senkrecht zur Motorachse gerichteten Rastfüßen in entsprechende Rastöffnungen eines im wesentlichen achsparallelen Absatzes des Lagerbügels einsteckbar ist.

Eine demgegenüber sicherere, auch bei größeren montage- bzw. betriebsmäßig anfallenden Zugbelastungen sich nicht wieder lösende Halterung des Zwischenklemmbrettes an dem Motor kann auf trotzdem weiterhin fertigungstechnsich einfache Weise erfindungsgemäß durch die Merkmale des Anspruchs 1 erreicht werden; vorteilhafte Ausgestaltungen dieser Erfindung sind jeweils Gegenstand der Unteransprüche.

Bei der erfindungsgemäßen Zwischenklemmbrettanbringung kann bei der Montage in einem einfachen Schwenkvorgang das Zwischenklemmbrett formschlüssig im Sinne einer Zugentlastung für die Anschluß- bzw. Zwischenleitungen an dem Motorteil angebracht und diese vorteilhafte formschlüssige Halterung durch die dabei einschnappende Rasthalterung relativ zum Motorteil gesichert werden.

Die Erfindung sowie weitere vorteilhafte Ausgestaltungen der Erfindung werden im folgenden anhand schematisch dargestellter Ausführungsbeispiele der Erfindung in der Zeichnung näher erläutert; darin zeigen:
- FIG 1: eine axiale Draufsicht auf einen Kommutatormotor mit an seinem linken, kommutatorseitigen Ende gehaltenem Zwischenklemmbrett;
- FIG 2: eine Vormontage-Bauteileinheit mit an einem Zwischenklemmbrett gehaltenen und gegenseitig kontaktierten äußeren Anschlußleitungen bzw. motorinternen Zwischenleitungen;
- FIG 3: die axiale Draufsicht auf das Zwischenklemmbrett gemäß FIG 2;
- FIG 4-6: in drei Einzeldarstellungen die Ausführung bzw. Einschwenkfixierung des Zwischenklemmbrettes relativ zu dem Motorteil mit gleichzeitig festklemmbarer Masseleitung.

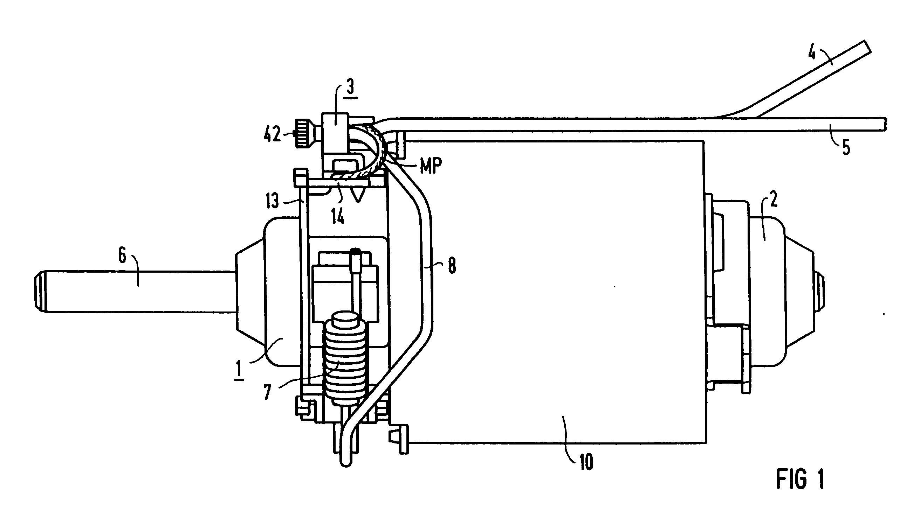

FIG 1 zeigt in einer axialen Draufsicht einen Kommutatormotor, z.B. zum Antrieb eines Kraftfahrzeuglüfters. Das Motorgehäuse 10 ist an seinen beiden axialen Stirnseiten durch je einen Lagerbügel 1 bzw. 2 abgeschlossen; aus dem linken Lagerbügel 1 ragt ein verlängertes Ende der Rotorwelle 6, das z.B. zur Aufnahme eines Lüfterrades eines Kraftfahrzeuglüfters dienen kann. Zum elektrischen Anschluß des Kommutatormotors, z.B. an das Bordnetz eines Kraftfahrzeuges, dient eine aus Anschlußleitungen 4;5 bestehende Verbindung, deren motorseitige Enden zu einem Zwischenklemmbrett 3 führen, das an dem linken Lagerbügel 1 derart zugentlastend befestigt ist, daß am Zwischenklemmbrett 3 mit den äußeren Anschlußleitungen 4;5 kontaktierte und gehalterte Zwischenleitungen zu Entstördrosseln 7, die ihrerseits mit Kohlebürsten zur Kontaktierung mit dem hier nicht gezeigten Kommutator verbunden sind, durch montage- bzw. betriebsmäßige Zugbelastungen nicht beeinträchtigt werden.

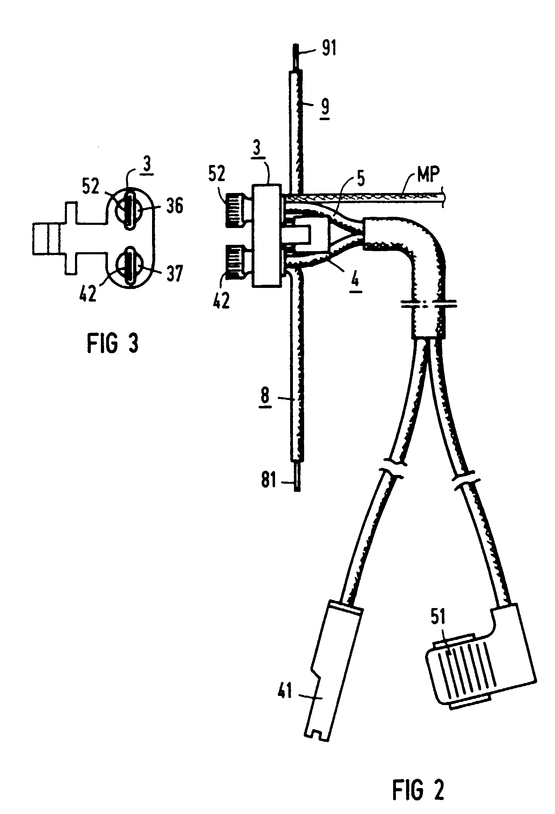

Gemäß FIG 2 ist das Zwischenklemmbrett 3 mit den daran gehalterten und kontaktierten äußeren Anschlußleitungen 4;5 bzw. Zwischenleitungen 8;9 zu den Entstördrosseln 7 als vormontierte Bauteileinheit dargestellt, die dann bei der Gesamtmontage des Kommutatormotors lediglich nur noch am Lagerbügel 1 zu befestigen und mit den Entstördrosseln zu kontaktieren ist. Die äußeren Anschlußleitungen 4;5 weisen an ihren dem Zwischenklemmbrett 3 abgewandten Enden kundenspezifische Stecker 41;51 auf, die Zwischenleitungen 8;9 sind an ihren dem Zwischenklemmbrett 3 abgewandten Enden mit abisolierten Litzen 81;91 versehen, die nach der Montage der vormontierten Bauteileinheit am Lagerbügel 1 lediglich noch mit den Entstördrosseln 7 zu kontaktieren sind. Zur gegenseitigen Kontaktierung der äußeren Anschlußleitungen 4 bzw. 5 mit den zugehörigen entsprechenden Zwischenleitungen 8;9 dienen Aderendhülsen 42;52, die in Aufnahmeöffnungen 36;37 mit formschlüssiger Sicherung in Gegenrichtung zu den montage- bzw. betriebsmäßigen Zugbelastungen der Anschluß- bzw.Zwischenleitungen einsteckbar sind.

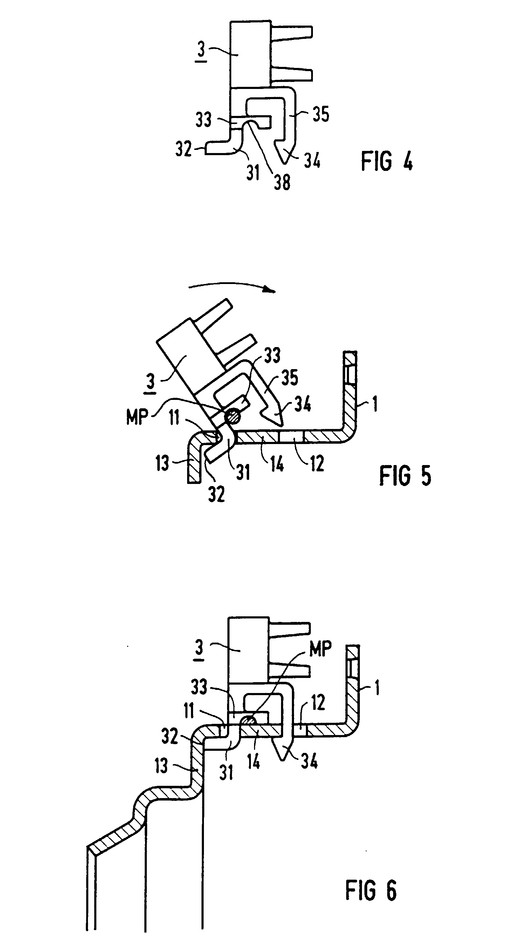

Die erfindungsgemäße Halterung des Zwischenklemmbrettes 3 an einem Motorteil, insbesondere an dem linken Lagerbügel 1, wird im folgenden anhand FIG 4-6 näher erläutert, in denen zur deutlicheren Darstellung die an sich zuvor kontaktierten und gehalterten äußeren Anschlußleitungen bzw. Zwischenleitungen weggelassen sind.

FIG 4 zeigt ein Kunststoff-Zwischenklemmbrett 3 mit einem an seiner Unterseite einstückig angeformten kniehebelartigen Ansatz 31 und einem in Richtung der zugbelastenden Leitungen angeformten Rastansatz 35 mit einer Rastnase 34. Bei der Montage des Zwischenklemmbrettes 3 an einem im wesentlichen achsparallel verlaufenden Absatz 14 des Lagerbügels 1 wird gemäß FIG 5 der kniehebelartige Ansatz 31 derart durch Einschwenken in eine erste Einstecköffnung 11 des Lagerbügels 1 eingebracht, daß das Zwischenklemmbrett 3 in der Endhalterung gemäß FIG 6 einerseits entgegen der Zugbelastung der Zwischenleitungen und insbesondere der Anschlußleitungen formschlüssig gelagert ist, wobei es mit seinem kniehebelartigen Ansatz 31 lagefixierend längsseitig an der Unterseite des Lagerbügels 1 und an seiner dem abgewinkelten freien Ende 32 des kniehebelartigen Ansatzes 31 abgewandten Seite an der Wandung der ersten Einstecköffnung 11 anliegt, und andererseits gegen ein Rückschwenken dadurch gesichert ist, daß gleichzeitig mit dem Einschwenken die Rastnase 34 durch eine zweite Einstecköffnung 12 des Lagerbügels 1 einschnappt und in der Endhalterung des Zwischenklemmbrettes 3 die Unterfläche des Lagerbügels 1 hintergreift.

In vorteilhafter weiterer Lagefixierung liegt einerseits das abgewinkelte freie Ende 32 des kniehebelartigen Ansatzes 31 kopfseitig an einem achssenkrechten Absatz 13 des Lagerbügels 1 an, liegt weiterhin der kniehebelartige Ansatz 31 mit einem die erste Einstecköffnung 11 zumindest teilweise übergreifenden Anschlag 33 an der Oberseite des Lagerbügels 1 im Bereich seines im wesentlichen achsparallel verlaufenden Absatzes 14 an und liegt schließlich der an seinem Ende die Rastnase 34 aufnehmende, elastisch wegbiegbare Rastansatz 35 im Bereich der zweiten Einstecköffnung 12 an deren der ersten Einstecköffnung 11 zugewandten Kante des Lagerbügels 1 an.

Es dürfte ersichtlich sein, daß mit dem erfindungsgemäß ausgebildeten und montierbaren bzw. fixierbaren Zwischenklemmbrett ein zugentlastender Stützpunkt geschaffen wird, der durch einfache Schwenkmontage einerseits eine gesicherte formschlüssige Fixierung an einem Motorteil, insbesondere einem Lagerbügel, entgegen der Zugbelastung der Leitungen gewährleistet und der gleichzeitig durch die mit dem Einschwenken des kniehebelartigen Ansatz einschnappende Rastnase gegen ein Rückschwenken aus seiner zugentlastenden Endhalterung auf einfache Weise fixierbar ist.

In vorteilhafter Weise wird - wie aus FIG 4-6 ersichtlich - nach einer Ausgestaltung der Erfindung gleichzeitig mit dem Einschwenken des Zwischenklemmbrettes 3 in seine verrastete Endhalterung eine Masseleitung MP miteinklemmt und in leitende Klemmverbindung mit dem Motorteil 1 gebracht, das dazu zweckmäßigerweise elektrisch leitend, vorzugsweise als Metall-Lagerbügel, ausgebildet ist.

Zur montagevereinfachenden und endgültigen sicheren Lagefixierung der Masseleitung MP ist nach einer Ausgestaltung der Erfindung das Zwischenklemmbrett 3 mit einer in Richtung des zu kontaktierenden Motorteils 1 offenen Fixieröffnung 38 - wie insbesondere aus FIG 4 ersichtlich - versehen, in die - wie insbesondere aus FIG 5 ersichtlich - die Masseleitung MP derart teilweise einlegbar ist, daß sie - wie insbesondere aus FIG 6 ersichtlich - in der Endhalterung des Zwischenklemmbrettes gegen den Motorteil 1 gut leitend festgeklemmt bzw. festgequetscht positioniert ist.

## Patentansprüche

1. Elektromotor, insbesondere Kommutatormotor, mit einem an einem Motorteil befestigbarem Zwischenklemmbrett (3) zur zugentlasteten Halterung bzw. gegenseitigen Kontaktierung von äußeren Anschlußleitungen (4;5) bzw. zum Kommutatormotor führenden Zwischenleitungen (8;9) mit folgenden Merkmalen:
a) Das Zwischenklemmbrett (3) ist mit einem kniehebelartigen Ansatz (31) in eine erste Aufnahme (11) des Motorteils (1) im Sinne einer zumindest in Gegenrichtung zu der Zugbelastung (4,5;8,9) formschlüssigen Endhalterung einschwenkbar;
b) das Zwischenklemmbrett (3) ist in seiner Endhalterung durch eine beim Einschwenken in eine weitere Aufnahme des Motorteils (13) einschnappende Rasthalterung (34;35) gegen ein Rückschwenken von dem Motorteil (13) sicherbar.

2. Elektromotor nach Anspruch 1 mit dem Merkmal:
c) Als Motorteil ist ein Motor-Lagerbügel (1) vorgesehen.

3. Elektromotor nach Anspruch 1 und/oder 2 mit dem Merkmal:
d) Der kniehebelartige Ansatz (31) ist mit seinem abgewinkelten freien Ende (32) durch eine erste Einstecköffnung (11) des Motorteils (1) schwenkbar.

4. Elektromotor nach Anspruch 3 mit dem Merkmal:
e) Das abgewinkelte freie Ende (32) des kniehebelartigen Ansatzes (31) liegt lagefixierend längsseitig an der Unterseite des Motorteils (1) an.

5. Elektromotor nach Anspruch 3 und/oder 4 mit dem Merkmal:
f) Das, insbesondere in Gegenrichtung zur Zugbelastung, abgewinkelte freie Ende (32) des kniehebelartigen Ansatzes (31) liegt lagefixierend kopfseitig an einem Absatz (13) des Motorteils (1) an.

6. Elektromotor nach zumindest einem der Ansprüche 3-5 mit dem Merkmal:
g) Der kniehebelartige Ansatz (31) liegt an seiner dem abgewinkelten freien Ende (32) abgewandten Seite an dem torteil (1) an.

7. Elektromotor nach zumindest einem der Ansprüche 3-6 mit dem Merkmal:
h) Der kniehebelartige Ansatz (31) liegt mit einem die erste Einstecköffnung (11) übergreifenden Anschlag (33) an der Oberseite des Motorteils (1) an.

8. Elektromotor nach zumindest einem der Ansprüche 1-7 mit dem Merkmal:
i) Als Rasthalterung ist eine über einen elastischen Rastansatz (35) durch eine zweite Einstecköffnung (12) des Motorteils (1) beim Einschwenken mittels elastischer Wegbiegung führbare und in der Endhalterung die Unterfläche des Motorteils (1) hintergreifende bzw. an dieser anliegende Rastnase (34) vorgesehen.

9. Elektromotor nach Anspruch 8 mit dem Merkmal:
j) Die Rasthalterung liegt im Bereich der zweiten Einstecköffnung (12) an deren der ersten Einstecköffnung (11) zugewandten Kante an.

10. Elektromotor nach zumindest einem der Ansprüche 1-9 mit dem Merkmal:
k) Der kniehebelartige Ansatz und/oder die Rasthalterung sind einstückige Teile des, vorzugsweise aus Kunststoff bestehenden, Zwischenklemmbrettes.

11. Elektromotor nach zumindest einem der Ansprüche 1-11 mit dem Merkmal:
1) Als Motorteil (1) ist ein elektrisch leitender Teil, insbesondere ein Metall-Lagerbügel vorgesehen;
m) zwischen dem Motorteil (1) und dem Zwischenklemmbrett (3) ist in dessen Endhalterung eine Masseleitung (MP) bzw. Erdungsleitung elektrisch leitend mit dem Motorteil (1) miteingeklemmt.

12. Elektromotor nach Anspruch 11 mit dem Merkmal:
n) Die Masseleitung (MP) bzw. Erdungsleitung ist in einer in Richtung des Motorteils (1) offene Fixieröffnung (36) teilweise einlegbar.

## Claims

1. Electric motor, in particular commutator motor, having an intermediate terminal board (3), which can be fastened to a motor part, for the strain-relieved retention and mutual contact-making of external connection leads (4;5) and intermediate leads (8;9) leading to the commutator motor, having the following features:
a) the intermediate terminal board (3) can be pivoted with a toggle lever-like attachment (31) into a first receptacle (11) of the motor part (1) in the sense of final retention in a positively locking manner at least in the opposite direction to the tensile load (4,5;8,9);
b) the intermediate terminal board (3) can be secured against pivoting back from the motor part (13) in its final retention by means of a latching retention (34;35) which snaps into a further receptacle of the motor part (13) during the pivoting-in operation.

2. Electric motor according to Claim 1, having the feature:
c) a motor bearing clip (1) is provided as the motor part.

3. Electric motor according to Claim 1 and/or 2, having the feature:
d) the toggle lever-like attachment (31) can be pivoted by its angular free end (32) through a first insertion opening (11) in the motor part (1).

4. Electric motor according to Claim 3, having the feature:
e) the angular free end (32) of the toggle lever-like attachment (31) bears with its longitudinal side on the underside of the motor part (1) in a position-fixing manner.

5. Electric motor according to Claim 3 and/or 4, having the feature:
f) the, in particular in the opposite direction to the tensile load, angular free end (32) of the toggle lever-like attachment (31) bears with its head end on a shoulder (13) of the motor part (1) in a position-fixing manner.

6. Electric motor according to at least one of Claims 3 - 5, having the feature:
g) at its end facing away from the angular free end (32), the toggle lever-like attachment (31) bears on the motor part (1).

7. Electric motor according to at least one of Claims 3 -6, having the feature:
h) the toggle lever-like attachment (31) bears on the top side of the motor part (1) with a stop (33) which reaches over the first insertion opening (11).

8. Electric motor according to at least one of Claims 1 - 7, having the feature:
i) the latching retention provided is a latching lug (34) which, by way of one elastic latching attachment (35), can be guided through a second insertion opening (12) in the motor part (1) during the pivoting-in operation by means of elastic bending-away and, in the final retention, engages behind, and bears on, the undersurface of the motor part (1).

9. Electric motor according to Claim 8, having the feature:
j) the latching retention bears, in the region of the second insertion opening (12) on that edge of the latter which faces the first insertion opening (11).

10. Electric motor according to at least one of Claims 1- 9, having the feature:
k) the toggle lever-like attachment and/or the latching retention are integral parts of the intermediate terminal board, which is preferably composed of plastic.

11. Electric motor according to at least one of Claims 1 - 11, having the feature:
l) an electrically conductive part, in particular a metal bearing clip, is provided as the motor part (1);
m) in the final retention of the intermediate terminal board (3) an earth lead (MP) is also clamped in between the motor part (1) and the intermediate terminal board (3), in a manner such that it is electrically conductive with the motor part (1).

12. Electric motor according to Claim 11, having the feature:
n) the earth lead (MP) can be partially inserted into a fixing opening (36) which is open in the direction of the motor part (1).

## Revendications

1. Moteur électrique, notamment moteur à collecteur, comportant une plaque (3) intermédiaire à bornes pouvant être fixée à une partie du moteur et destinée à la fixation avec soulagement en traction ou à la mise en contact mutuelle de lignes (4 ; 5) de raccordement extérieures et de lignes (8 ; 9) intermédiaires menant au moteur à collecteur, ayant les caractéristiques suivantes :
a) La plaque (3) intermédiaire à bornes peut basculer par un prolongement (31) du type levier à genouillère dans un premier logement (11) de la partie (1) du moteur en vue d'une fixation d'extrémité par complémentarité de forme au moins dans le sens opposé à la contrainte (4, 5 ; 8, 9) de traction ;
b) La plaque (3) intermédiaire à bornes peut être empêchée de basculer en arrière de la partie (13) du moteur dans sa fixation d'extrémité par une fixation (34 ; 35) à encliquetage s'encliquetant dans un autre logement de la partie (13) du moteur lors du basculement.

2. Moteur électrique suivant la revendication 1 ayant la caractéristique :
c) il est prévu comme partie du moteur un étrier (1) de palier du moteur.

3. Moteur électrique suivant la revendication 1 et/ou 2 ayant la caractéristique :
d) le prolongement (31) du type levier à genouillère peut basculer par son extrémité (32) libre coudée dans une première ouverture (11) d'enfichage de la partie (1) du moteur.

4. Moteur électrique suivant la revendication 3 ayant la caractéristique :
e) l'extrémité libre coudée (32) du prolongement (31) du type levier à genouillère s'applique du côté longitudinal avec immobilisation en position au côté inférieur de la partie (1) du moteur.

5. Moteur électrique suivant la revendication 3 et/ou 4 ayant les caractéristiques :
f) l'extrémité libre (32) coudée, notamment dans le sens opposé à la contrainte de traction, du prolongement (31) du type levier à genouillère s'applique avec immobilisation en position du côté de la tête à un gradin (13) de la partie (1) du moteur.

6. Moteur électrique suivant au moins l'une des revendications 3 à 5 ayant la caractéristique :
g) le prolongement (31) du type levier à genouillère s'applique du côté éloigné de l'extrémité libre (32) coudée à la partie (1) du moteur.

7. Moteur électrique suivant au moins l'une des revendications 3 à 6 ayant la caractéristique :
h) le prolongement (31) du type levier à genouillère s'applique par une butée (33) empiétant sur la première ouverture (11) d'enfichage au côté supérieur de la partie (1) du moteur.

8. Moteur électrique suivant au moins l'une des revendications 1 à 7 ayant la caractéristique :
i) il est prévu comme fixation à encliquetage un bec (34) d'encliquetage pouvant passer par l'intermédiaire d'un prolongement (35) à encliquetage élastique par une seconde ouverture (12) d'enfichage de la partie (1) du moteur lors du basculement par flexion élastique lors du déplacement, saisissant par l'arrière la surface inférieure de la partie (1) du moteur dans la fixation d'extrémité et s'appliquant à celle-ci.

9. Moteur électrique suivant la revendication 8 ayant la caractéristique :
j) la fixation à encliquetage s'applique, dans la zone de la seconde ouverture (12) d'enfichage à son bord tourné vers la première ouverture (11) d'enfichage.

10. Moteur électrique suivant au moins l'une des revendications 1 à 9 ayant la caractéristique :
k) le prolongement du type levier à genouillère et/ou la fixation à encliquetage sont des parties d'une seule pièce de la plaque intermédiaire à bornes de préférence en matière plastique.

11. Moteur électrique suivant au moins l'une des revendications 1 à 11 ayant la caractéristique :
I) il est prévu comme partie (1) du moteur une partie conductrice de l'électricité, notamment un étrier de palier en métal ;
m) une ligne (MP) de masse ou une ligne de mise à la masse est bloquée conjointement avec la partie (1) du moteur de manière à conduire l'électricité entre la partie (1) du moteur et la plaque (3) intermédiaire à bornes dans sa fixation d'extrémité.

12. Moteur électrique suivant la revendication (11) ayant la caractéristique :
n) la ligne (MP) de masse ou ligne de mise à la masse peut être partiellement insérée dans une ouverture (36) d'immobilisation ouverte dans la direction de la partie (1) du moteur.
